Europäisches Patentamt

European Patent Office

Office européen des brevets

(11) Publication number: **0 249 368**
**A2**

# EUROPEAN PATENT APPLICATION

(21) Application number: **87304787.2**

(22) Date of filing: **29.05.87**

(51) Int. Cl.⁴: **C13K 5/00** , **A23C 9/142**

(30) Priority: **04.06.86 US 870500**

(43) Date of publication of application:
**16.12.87 Bulletin 87/51**

(84) Designated Contracting States:
**AT BE CH DE ES FR GB GR IT LI LU NL SE**

(71) Applicant: **Dairy Technology Limited**
**Route 3**
**Baraboo Wisconsin 53913(US)**

(72) Inventor: **Gjersvig, Wayne H.**
**1402 Hickory Drive**
**Stevens Point Wisconsin 54481(US)**

(74) Representative: **Allard, Susan Joyce et al**
**BOULT, WADE & TENNANT 27 Furnival Street**
**London EC4A 1PQ(GB)**

(54) **One step lactose process.**

(57) A process for isolating lactose from a lactose-rich liquid for example whey, including calcium and ash, which comprises
decolorizing and reducing the calcium content of the whey to less than about 0.1% dry solids basis;
crystallizing substantially pure lactose crystals out of the decolorized whey in one step; and
separating the lactose liquid from the whey.

EP 0 249 368 A2

## ONE STEP LACTOSE PROCESS

This invention relates generally to processes for obtaining purified lactose crystals from lactose-rich liquids. More specifically, the invention relates to obtaining National Formulary or U.S.P. grade lactose from permeate through a process that uses a single crystallization step.

Whey is a by-product of cheese manufacturing. Because of its high Biological Oxygen Debt (BOD) raw whey cannot be dumped directly into waterways without causing pollution problems. Various methods have been developed for treating whey and extracting the protein, lactose, and mineral components therefrom. The resulting treated whey can be disposed of without harming the environment. Such conventional treatment methods produce protein-and/or lactose-rich fractions that have found uses as, e.g., nutritional supplements. Substantially pure edible grade lactose can be produced from these lactose-rich fractions through a process employing a single crystallization step, such a process is disclosed in US-A-4202909 (Pederson). However, the product of the Pederson process is a turbid and yellow colored liquid from which high grade lactose cannot be crystallized in a single step. High grade lactose has important uses in the chemical industry, such as in the manufacture of pharmaceutical tablets and capsules, where the less pure edible grade lactose cannot be used. Existing methods for obtaining high grade lactose from cheese whey involve high energy expenditures and low yields of the final product because they require at least two crystallization steps.

It would be desirable to provide a method for obtaining high grade lactose efficiently and economically from a lactose rich liquid and in particular from cheese whey permeate.

It would also be desirable to provide a method for obtaining high grade lactose that requires relatively low energy expenditure and that produces NF grade lactose in high yields.

It would further be desirable to provide a method for treating cheese whey permeate that eliminates the waste disposal problems associated therewith.

Accordingly the present invention provides a process for isolating lactose from a lactose rich liquid, preferably whey, containing calcium which comprises: reducing the calcium content of the liquid to less than about 0.1%, preferably 0.08%, dry solids basis, decolorizing the liquid, crystallizing substantially pure lactose crystals out of the decolorized liquid in one step, and separating those crystals from the liquid.

Preferably the liquid is decolorized by treatment with activated carbon.

In preferred embodiments the calcium content of the liquid is reduced by electrodialysis, ion exchange or by addition of a salt that promotes precipitation of a substantially insoluble calcium salt, preferably soldium carbonate or potassium carbonate. Additional calcium may be removed by reverse osmosis and/or clarification. If reverse osmosis is used then preferably it is carried out using a membrane having high salt rejection and low lactose rejection characteristics prior to further reduction of the calcium content by electrodialysis, ion exchange or addition of a salt that promotes precipitation of a substantially insoluble calcium salt.

For the purposes of this invention high grade lactose is defined as substantially pure, white crystalline lactose that substantially conforms to the specifications for NF and USP grade lactose. According to NF XVI, p. 1571 (1985), National Formulary grade lactose is characterized as follows: a solution of 3 g NF lactose in 10 ml of boiling water is clear, colorless or nearly colorless, and odorless; a solution of 10 g anhydrous NF lactose and 0.2 mL 6N ammonium hydroxide in 100 ml of $H_2O$ has a specific rotation between $+54.8°$ and $+55.5°$ at $20°C$; the total bacterial count is not in excess of 100 per gram, and Salmonella and E. coli tests are negative; a 1:10 solution in $H_2O$ has a pH between 4.0-6.5; residue on ignition is not greater than 0.1%; alcohol soluble residue is not in excess of 20 mg per 2.5 g lactose dissolved in 10 ml alcohol; and heavy metals contamination is not greater that 5 ppm.

Figure 1 is a flow chart setting forth a method of the invention; and

Figure 2 is a flow chart setting forth an alternative embodiment of the invention, including the addition of sodium carbonate to the cheese whey permeate.

Whey, a by-product of cheese production, is rich in protein, lactose, and minerals. The process of the invention can be used to obtain substantially pure lactose from other lactose-rich liquids, such as for example milk or skim milk, but will be most commonly employed with whey or with the lactose-rich permeate obtained from the ultrafiltration of whey.

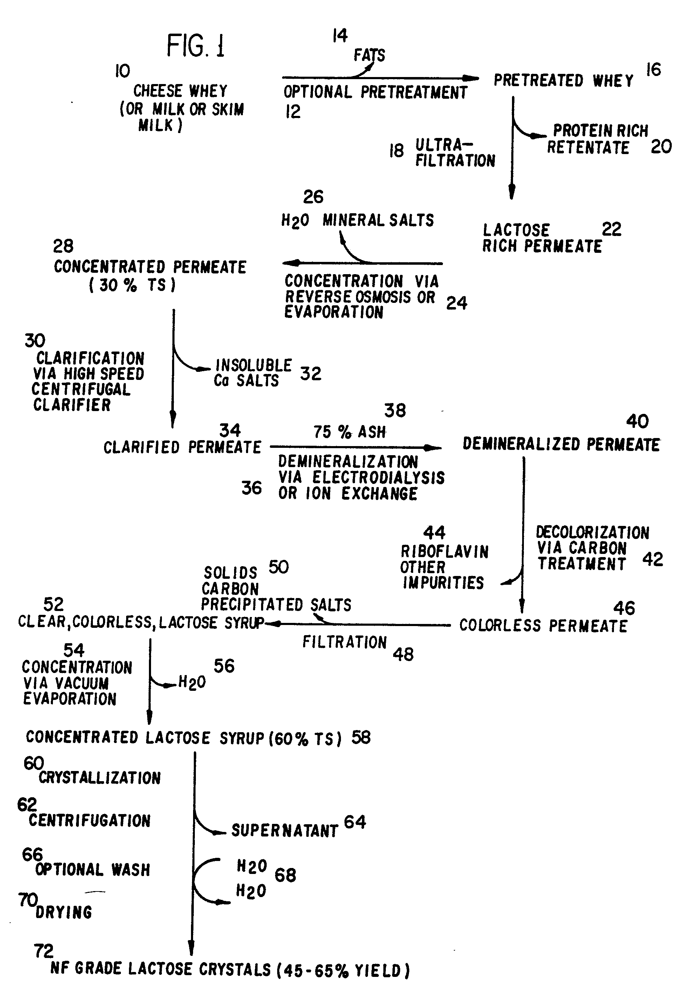

Referring now to FIGURE 1 cheese whey feed 10 is optionally subjected to a pretreatment step 12, such as pasteurization, and/or the removal of fat or lipid complexes 14 whereby the fat content of the feed is reduced to about 0.1% or less. The fat content can be reduced by various methods such as filtration, centrifuging, or both, or by precipitation followed by filtration or centrifuging. Pretreatment may also involve pH adjustment to near neutrality, as for example to a pH value of about 6.2 to 6.4. Pasteurization should be conducted under conditions, which are well known in the art, to avoid substantial denaturing of protein present in the whey. Thus, for example, the continuous pasteurization process can be carried out at temperatures of about 161 to 166°F for about 15-20 seconds.

In ultrafiltration step 18, the pretreated whey 16 is separated into a protein rich retentate and lactose rich permeate. Ultrafiltration step 18 may employ standard commercially available ultrafiltration equipment. The ultrafiltration apparatus preferably consists of a polysulfone sheet which is spirally wound on a support backing or plate. The ultrafiltration apparatus is advantageously designed to provide a 98% retention of alpha-lactalbumin, beta-lactoglobumin and other high molecular weight soluble milk proteins while permitting lactose to pass freely therethrough. Ultrafiltration is advantageously carried out at a pressure of about 20 to 50 psi and a temperature of about 100° to 140°F. The retenate 20 of the ultrafiltration step is high in protein and may be further processed to provide useful products such as food supplements or baby formula.

The permeate 22 of the ultrafiltration step is lactose-rich, and also contains most of the minerals and non-protein nitrogen initially present in the pretreated whey. Permeate can be obtained from the ultrafiltration of sweet whey, acid whey, milk, or skim milk from various sources. Preferably sweet whey is used and the resulting permeate has a pH of about 5.0 to 6.5, a protein content of less than about 4.5% dry solids basis (DSB), and a total solids content of about 5 to 15%.

The permeate 22 having a total solids content of about 5 to 15% is then concentrated to a total solids content of about 25 to 30%. This concentration step 24 can be accomplished, for example, through evaporation or reverse osmosis. However, it is preferred that this concentration be accomplished through reverse osmosis, utilizing a membrane with low salt rejection and high lactose rejection characteristics. More specifically, the preferred reverse osmosis membranes have a salt (NaCl) rejection characteristic of about 35 to 75%, whereas membranes customarily used for reverse osmosis have a salt rejection characteristic of about 93 to 98%.

The osmosis equipment may vary in its details of construction and arrangement of membrane modules, depending upon the desired capacity and other requirements. As is well known to those familiar with commercial membrane reverse osmosis equipment, the membrane modules may be in groups, with the groups connected in series parallel arrangements and with the feed being supplied by a pump capable of adjusting the applied fluid pressure. The reverse osmosis equipment employed may be of the one pass type or alternatively may be provided with a feed tank in which a quantity of whey is introduced for an operating cycle and retentate is circulated back into the feed tank.

With respect to conventional commercial reverse osmosis as applied to whey permeate, the effluent consists mainly of water, with only minor amounts of mineral salts and whey solids. Thus conventional osmosis serves simply to concentrate the whey to a total solids content in the order of about 12 to 30%, which generally must then undergo further processing.

When reverse osmosis is practiced using membranes having salt (NaCl) rejection characteristics of about 35 to 75%, fractionation takes place in such a manner that the permeate is substantially demineralized simultaneously with concentration; that is, both water and mineral salts 26 are removed in a single step. Moreover, fractionation occurs with respect to the mineral salt content, whereby the major part of the monovalent salts passes out with the effluent, and the mineral salts remaining with the treated permeate are mainly the bivalent salts. A further advantage of the use of reverse osmosis membranes having high salt rejection characteristics is that the flux rate achieved may be substantially higher than is experienced with conventional reverse osmosis. Thus, whereas conventional osmosis may have flux rates of the order of about 5 to 9 GFD (gallons per sq. foot per day), with the present invention the flux rates can be maintained at about 9 to 18 GFD. Such higher flux rates make fo rgreater capacity for a given osmosis equipment and total membrane area. This feature provides a highly efficient operation and tends to reduce overall processing costs.

Where the concentration step 24 is accomplished by reverse osmosis, the reverse osmosis process can be modified by diafiltration of the permeate. The term diafiltration refers to the addition of water to the feed material. As water is permeated through the membrane, additional soluble minerals and nitrogen are carried with the water. Two methods of diafiltration can be used. The permeate 16 can be diluted with an equal volume of water prior to the reverse osmosis step or, alternatively, the permeate is partially concentrated and water is then added at about the same rate that permeate passes through the reverse osmosis membranes. Water addition is discontinued when a volume approximately equal to one half the initial volume of permeate has been added.

The concentratred and partially demineralized permeate 28 is then subjected to clarification step 30 using, e.g., a high speed centrifugal clarifier such as those used in dairy plants. For example, a DeLaval model MRPX 409 may be employed, operated at 6 gallons/minute and at a temperature between about 110° and 140°F. Alternatively, the clarification can be accomplished by filtering the concentrated permeate through iron free or reduced · diatomaceous earth (e.g., acid washed celite). Clarification removes much of the calcium in the form of insoluble calcium phosphate and calcium citrate salts 32.

After clarification step 30, the permeate 34 is demineralized. Demineralization step 36 is accomplished by, e.g., electrodialysis or ion exchange, so that approximately 75 to 90% of the total ash in the original permeate 38 is removed. The electrodialysis equipment used may be of the type having a plurality of membrane stacks connected in series with the whey flowing through ducts concurrently to a brine stream. Suitable equipment of this type is disclosed in U.S. Patent Nos. 2,730,786; 2,731411; 2,800,445; and 3,544,436. The demineralized permeate 40 contains about 80 to 85% of the original starting permeate solids. The solids lost in demineralization 38 are easily treated in conventional waste treatment systems.

Where concentration 24 is accomplished by reverse osmosis with a high salt rejection membrane, the partial demineralization accompanying the concentration step permits a high demineralization rate during the demineralization step 36. The clarification step 30 also has the effect of reducing fouling of the demineralization apparatus and increasing the demineralization rate during demineralization 36.

The demineralized permeate 40 is further refined by decolorization. Decolorization step 42 is accomplished e.g., by contact with activated carbon or by passing the treated permeate through an absorption resin bed. The decolorization step 42 serves to remove riboflavin, as well as other impurities 44.

After decolorization, the permeate 46 is passed through a filter. Filtration 48 is preferably carried out with a pressure filtration apparatus, and thereafter the filtrate can be passed thorugh a polishing filter.

The filtrate 52 is then concentrated to a total solids content of approximately 60%. Concentration step 54 removes water 56 from the lactose solution and is preferably accomplished by vacuum evaporation, which is typically conducted at an elevated temperature.

Lactose is then crystallized at step 62 using conventional techniques and apparatus. The crystals are recovered from the supernatant by, e.g., centrifugation 62. Supernatant 64 may be disposed of or concentrated further for recovery of additional lactose. While in the centrifuge, the lactose crystals are washed 66 with fresh water 68, or with any other appropriate solvent that will wash away impurities without causing loss of an excessive quantity of crystalline lactose. The lactose crystals are then dried 70 and high grade lactose 72 is recovered, typically with an overall yield of approximately 45-65% of the original permeate solids.

An important feature of the above described process that results in a substantial yield of high grade lactose with only a single crystallization step is the removal of most of the calcium present and decolorization prior to crystallization. In the process described above, calcium is removed during the steps of reverse osmosis 24, clarification 30, and demineralization 38. It has been discovered that high grade lactose can be obtained from a single crystallization step if the calcium content of the whey is reduced to less than about 0.1% DSB, preferably to less than about 0.08%.

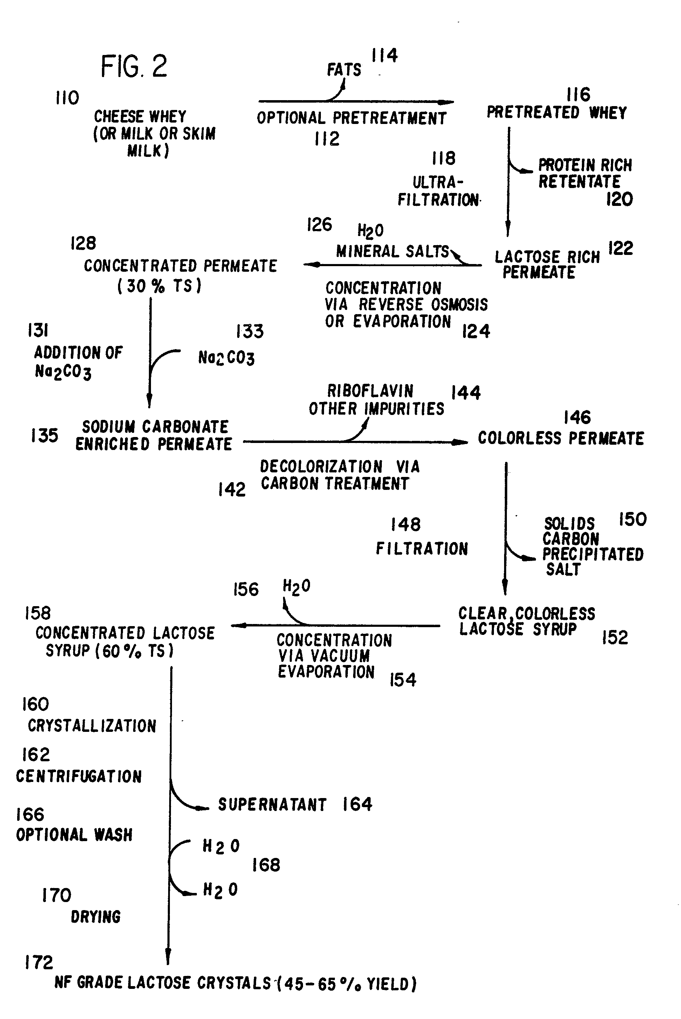

In an alternative method, shown in FIGURE 2, calcium is removed by the addition 131 of a precipitation agent, such as sodium carbonate 133 or similar compounds that can form insoluble calcium salts, to the concentrated ultrafiltration permeate 128. The resulting insoluble calcium compounds, e.g., calcium carbonate 150 precipitate and are subsequently removed by e.g., filtration.

According to this alternative method, whey 110, is optionally pretreated 112 and then subjected to ultrafiltration 118 and concentration 124 as described above. Sodium carbonate 133 is then added 131 to the concentrated permeate 128 in a sufficient quantity to precipitate enough calcium from the permeate so that the calcium content of the whey is reduced to the desired level of less than about 0.1% DSB. Sodium carbonate serves not only to promote precipitation of insoluble calcium salts, but also raises the pH of the whey, neutralizing to some extent its natural acidity. Any non-toxic soluble salt that promotes calcium precipitation, such as, for example, potassium carbonate, may be used as an alternative to sodium carbonate.

After the sodium carbonate addition 131, the permeate 135 undergoes decolorization 142, as described above. The decolorized permeate 146 is then filtered 148 to remove carbon and precipitated mineral salts 150. Again, filtration is advantageously carried out with a pressure filtration apparatus. The resulting filtrate is then concentrated 154 by, e.g., vacuum evaporation, and high grade lactose 172 is recovered by crystallization 160, centrifugation 162, an optional washing step 166 and drying 170.

## Claims

1. A process for isolating lactose from a lactose-rich liquid including calcium and ash, which comprises
decolorizing and reducing the calcium content of the whey to less than about 0.1% dry solids basis;
crystallizing substantially pure lactose crystals out of the decolorized whey in one step; and
separating the lactose liquid from the whey.

2. A process as claimed in claim 1 wherein the lactose rich liquid is whey.

3. A process as claimed in claim 1 or claim 2 wherein the calcium content of the liquid is reduced to less than 0.08% by weight.

4. A process as claimed in any one of the preceding claims wherein the decolorization step is accomplished by treating the liquid with activated carbon.

5. A process as claimed in any one of claims 1 to 4 wherein the calcium content of the liquid is reduced by electrodialysis.

6. A process as claimed in any one of claims 1 to 4 wherein the calcium content of the liquid is reduced in substantial part by ion exchange.

7. A process as claimed in any one of claims 1 to 4 wherein the calcium content of the liquid is reduced by addition of a salt that promotes precipitation of substantially insoluble calcium salts.

8. A process as claimed in any one of claims 5 to 7 wherein the calcium content of the liquid is reduced in part by reverse osmosis with a membrane having high salt rejection and low lactose rejection characteristics prior to the electrodialysis, ion exchange or addition of a salt that promotes precipitation of substantially insoluble calcium salts.

9. A process as claimed in any one of claims 5 to 7 wherein the calcium content of the liquid is reduced in part by clarification.

10. A process for separating substantially pure lactose crystals from a lactose rich liquid containing a significant amount of dissolved calcium, the process characterized by the steps of:
subjecting the liquid to reverse osmosis wherein a reverse osmosis membrane having high salt and low lactose rejection characteristics is employed, said reverse osmosis step concentrating the liquid to a total solids content of about 30% and removing calcium from the liquid;
clarifying the liquid by means of a high speed centrifugal clarifier, said clarification step removing insoluble calcium salts from the liquid;
demineralizing the liquid by means of electrodialysis or ion exchange said demineralization removing from about 75% to about 90% of the ash from the liquid to a level of less than about 0.1% calculated on a dry solids basis;
decolorizing the liquid by means of activated carbon treatment, said decolorizing step removing a substantial amount of any riboflavin present in the liquid;
filtering the liquid, said filtration step removing any solids, carbon, and precipitated salts from the liquid;
further concentrating the liquid by means of vacuum evaporation to a total solids content of about 60%;
crystallizing substantial pure lactose from the liquid; and
collecting the crystals.

11. A process for obtaining the high grade lactose crystals from a lactose rich liquid containing a significant amount of dissolved calcium, the process characterized by the steps of:
subjecting the liquid to reverse osmosis wherein a reverse osmosis membrane having high salt and low lactose rejection characteristics is employed, said reverse osmosis step concentrating the liquid to a total solids content of about 30% and removing calcium from the liquid;
adding to the liquid a sufficient amount of sodium carbonate to protomte the precipitation of insoluble calcium salts and thereby to reduce the calcium content of the liquid to a level of less than about 0.1% calculated on a dry solids basis;
decolorizing the liquid by means of carbon treatment, said decolorizing step removing a substantial amount of any riboflavin present in the liquid;
filtering the liquid, said filtration step removing any solids, carbon, and precipitated salts from the liquid;
further concentrating the liquid by means of vacuum evaporation to a total solids content of about 60%;
crystallizing substantially pure lactose from the liquid; and
collecting the crystals.

12. A process as claimed in any one of the preceding claims wherein the liquid treated is cheese whey and the lactose crystals separated from the whey after crystallization are N.F. or U.S.P. grade lactose.

0 249 368

FIG. 1

10 CHEESE WHEY (OR MILK OR SKIM MILK)

12 OPTIONAL PRETREATMENT → 14 FATS

16 PRETREATED WHEY

18 ULTRA-FILTRATION → 20 PROTEIN RICH RETENTATE

22 LACTOSE RICH PERMEATE

24 CONCENTRATION VIA REVERSE OSMOSIS OR EVAPORATION → 26 $H_2O$ MINERAL SALTS

28 CONCENTRATED PERMEATE (30 % TS)

30 CLARIFICATION VIA HIGH SPEED CENTRIFUGAL CLARIFIER → 32 INSOLUBLE Ca SALTS

34 CLARIFIED PERMEATE

36 DEMINERALIZATION VIA ELECTRODIALYSIS OR ION EXCHANGE → 38 75 % ASH

40 DEMINERALIZED PERMEATE

42 DECOLORIZATION VIA CARBON TREATMENT → 44 RIBOFLAVIN OTHER IMPURITIES

46 COLORLESS PERMEATE

48 FILTRATION → 50 SOLIDS CARBON PRECIPITATED SALTS

52 CLEAR, COLORLESS, LACTOSE SYRUP

54 CONCENTRATION VIA VACUUM EVAPORATION → 56 $H_2O$

58 CONCENTRATED LACTOSE SYRUP (60% TS)

60 CRYSTALLIZATION

62 CENTRIFUGATION → 64 SUPERNATANT

66 OPTIONAL WASH → 68 $H_2O$ $H_2O$

70 DRYING

72 NF GRADE LACTOSE CRYSTALS (45-65% YIELD)

## FIG. 2

110 CHEESE WHEY (OR MILK OR SKIM MILK)

FATS 114

OPTIONAL PRETREATMENT 112

116 PRETREATED WHEY

PROTEIN RICH RETENTATE 120

118 ULTRA-FILTRATION

128 CONCENTRATED PERMEATE (30 % TS)

126 H₂O MINERAL SALTS

LACTOSE RICH 122 PERMEATE

CONCENTRATION VIA REVERSE OSMOSIS OR EVAPORATION 124

131 ADDITION OF Na₂CO₃

133 Na₂CO₃

135 SODIUM CARBONATE ENRICHED PERMEATE

RIBOFLAVIN 144 OTHER IMPURITIES

146 COLORLESS PERMEATE

DECOLORIZATION VIA CARBON TREATMENT 142

148 FILTRATION

SOLIDS 150 CARBON PRECIPITATED SALT

156 H₂O

158 CONCENTRATED LACTOSE SYRUP (60 % TS)

CLEAR, COLORLESS LACTOSE SYRUP 152

CONCENTRATION VIA VACUUM EVAPORATION 154

160 CRYSTALLIZATION

162 CENTRIFUGATION

166 OPTIONAL WASH

SUPERNATANT 164

H₂O 168

H₂O

170 DRYING

172 NF GRADE LACTOSE CRYSTALS (45-65 % YIELD)